# EUROPEAN PATENT APPLICATION

(11) **EP 4 763 610 A1**
(43) Date of publication of application: **24.06.2026**
(21) Application number: 25225482.6
(22) Date of filing: 19.12.2025
(51) Int. Cl.: B60N 3/10

(54) **VEHICULAR HOUSING SYSTEM**

(30) Priority: 23.12.2024 IT 202400029793
(71) Applicant: IVECO S.P.A., 10156 Torino (IT)
(72) Inventor: GULIZIA, Davide, 10156 TORINO (IT)
(74) Representative: Studio Torta S.p.A.

(57) **Abstract**

A housing system (2) for a portion (1) of a vehicle provided with a base (3) connectable to the portion (1) and a mask (4) housed in the base (3), the mask (4) defining at least one housing (6) suitable for containing an object (V), the housing system (2) comprising retention means (10) configured to vary the space delimited by the housing (6) and to cooperate radially in contact and provide a radial preload to the object (V).

## Description

### CROSS-REFERENCE TO RELATED APPLICATIONS

This patent application claims priority from Italian patent application no. 102024000029793 filed on December 23, 2024, the entire disclosure of which is incorporated herein by reference.

### TECHNICAL SECTOR

This invention concerns a housing system, in particular a vehicular housing system.

This invention finds its preferred, though not exclusive, application in commercial vehicles. This application will be referred to below by way of example.

### PRIOR ART

Vehicles are known to be equipped with different housing systems in order to support different types of objects.

This need is all the more acute in commercial vehicles, lights ones as much as heavy ones, as drivers have to spend a lot of time in these vehicles and need to be able to accommodate different objects.

An example of these housing systems are the so-called beverage holders configured, as known, to provide support for liquid containers such as bottles, cans or glasses to prevent them from overturning while driving.

These beverage holders usually comprise a circular recess made in a portion of the dashboard or vehicle cabin. This recess, therefore, defines a side shoulder to contain the liquid containers stored in it.

However, it is clear that different shapes of recesses must be provided in order to house the most diverse sizes and shapes of liquid containers.

This provision of recesses of different shapes is, however, particularly costly as it is necessary to shape the aforementioned vehicle portion on a case-by-case basis.

In any case, the proposed recesses can hardly support various types of liquid containers and are, therefore, inconvenient and not very usable.

There is, therefore, a need to provide housing systems such as beverage holders that are as versatile and functional as possible without, however, being expensive and increasing the complexity of vehicle manufacture.

The purpose of this invention is to meet the needs outlined above in an optimal and inexpensive way.

### SUMMARY OF THE INVENTION

The above-mentioned purpose is achieved with a housing system, a vehicle portion, and a vehicle as claimed in the attached claims, which are an integral part of this description.

### BRIEF DESCRIPTION OF THE DRAWINGS

For a better understanding of this invention, a preferred embodiment is described below by way of non-limiting example and with reference to the accompanying drawings, wherein:
- Figure 1 is a perspective view of a vehicle portion equipped with a housing system according to the invention;
- Figure 2 is a perspective view of the housing system according to the invention.
- Figure 3 is an exploded perspective view of the housing system in Figure 2; and
- Figure 4 is a schematic cross-section view along a vertical axis of the housing system in Figure 2.

### DETAILED DESCRIPTION OF THE INVENTION

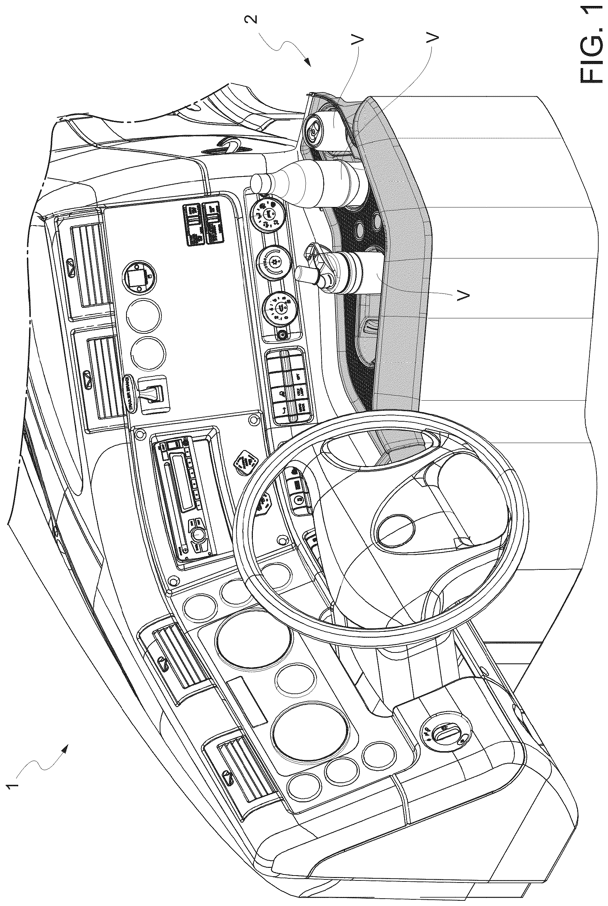

Figure 1 shows a portion 1 of a vehicle (not illustrated as a whole). In particular, this portion 1 is a vehicle dashboard.

The portion 1 is equipped with a housing system 2 according to the invention, in particular a beverage holder, that is configured to hold liquid containers V such as bottles, glasses or cans.

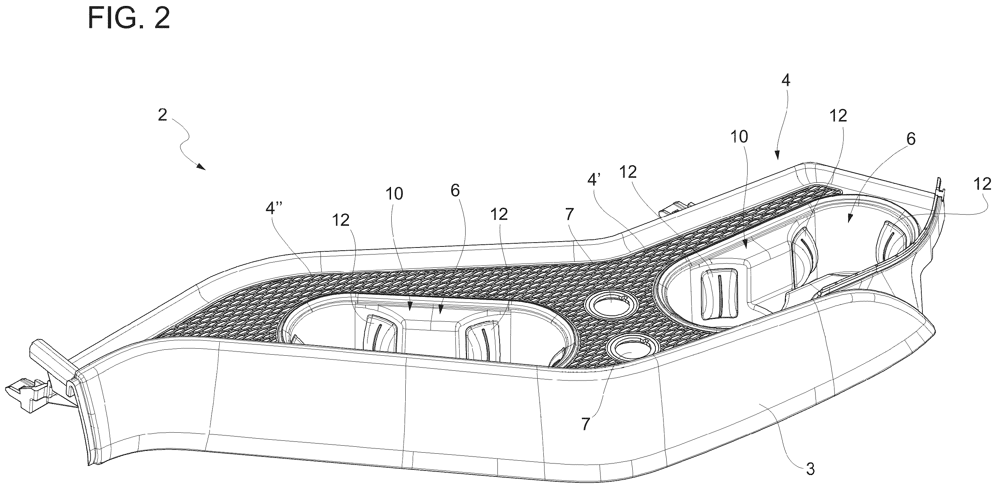

As best seen in Figure 2, the housing system 2 comprises a base 3 configured to be connected to the vehicle portion 1 and a mask 4 housed within the housing 2.

Both the base 3 and the mask 4 each define their respective housings 5, 6 configured so that the mask 4 can be housed in the base 3; that is, they are shaped to complement each other.

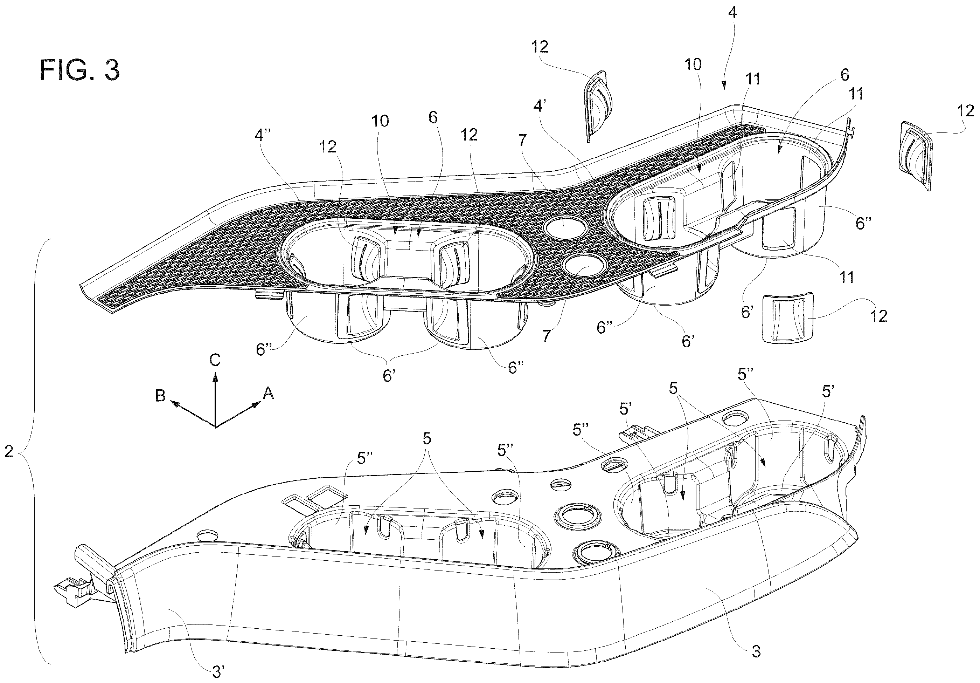

Referring to Figure 3, it can be seen that the base 3 comprises a main portion 3' provided (non-visible portion) with coupling elements 3", such as pins or couplings, configured to enable the connection of the base 3 to the vehicular portion 1.

In particular, these coupling elements 3" are provided on the opposite side of the surface with the housing 5 openings.

There are four of these housings 5 in the embodiment described, paired two by two and placed next to each other along a longitudinal extension axis A of the housing system 1.

In particular, as can be seen from the attached drawings, the base 3 has an elongated shape, that is, it extends further along the longitudinal axis A than a transverse axis B perpendicular to it.

The housings 5 made in the base 3 are defined by a bottom wall 5' spaced with respect to the main portion 3' along a vertical axis C perpendicular to the longitudinal and transverse axes A, B and a side wall 5" connecting the bottom wall 5' to the main portion 3' and extending over at least part, in particular over the whole, from the perimeter of the bottom wall 5'. Thus, the housing 5 is made along an opening axis parallel to the vertical axis C.

Advantageously, the bottom wall 5' is essentially flat and parallel to the main portion 3'. In the embodiment described, the bottom wall 5' has a circular shape and, therefore, the side wall 5'' defines a cylindrical space bounded between it and the bottom wall 5' and open to the outside.

Advantageously, the base 3 consists of a single piece, that is, it is monolithic, specifically made by moulding. Additionally, it is made of polymeric material, preferably polyurethane.

As mentioned, the mask 4 has a shape complementary to that of the base 3 and, therefore, comprises a related main portion 4' shaped to fit inside it and be selectively replaced for cleaning purposes.

Advantageously, the main portion 4 is housed merely supported or - alternatively - with interference with respect to the base 3.

The housings 6 made in the mask 4 are defined by a bottom wall 6' spaced with respect to the main portion 4' along the vertical axis C a side wall 6" connecting the bottom wall 6' to the main portion 4' and, in particular, extending over at least part, in particular over the whole, from the perimeter of the bottom wall 6'. Similarly to the housing 5, the housing 6 is made along an opening axis parallel to the vertical axis C.

Advantageously, the bottom wall 6' is essentially flat and parallel to the main portion 4'. In the embodiment described, the bottom wall 6' has a circular shape and, therefore, the side wall 6" defines a cylindrical space bounded between it and the bottom wall 5' and open to the outside.

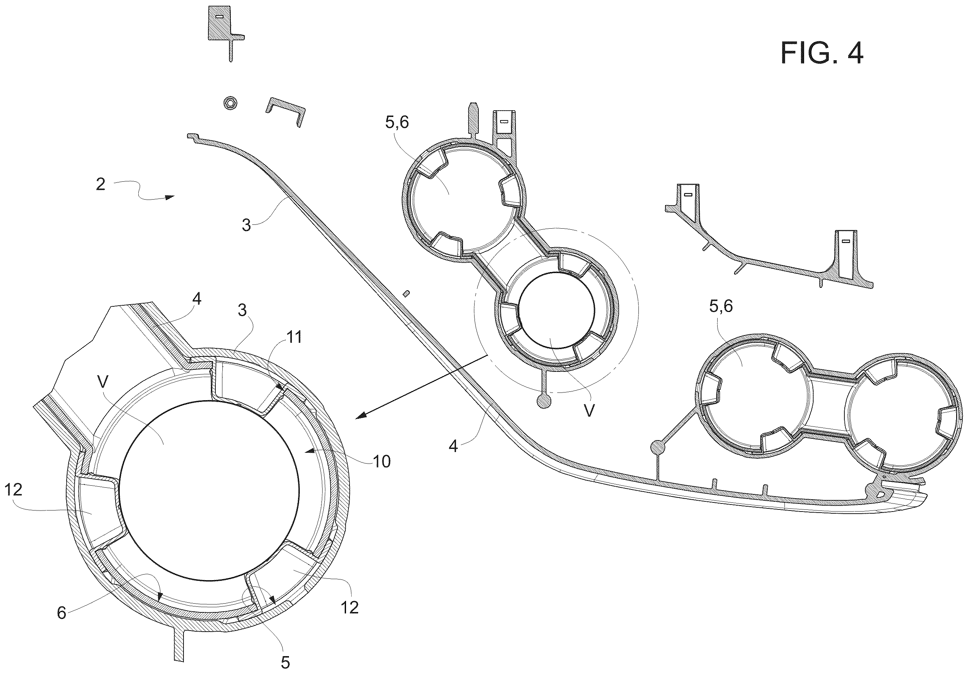

Specifically, as can be seen in Figure 4, the diameter of the bottom wall 6' and, thus, of the side wall 6" of the housings 6 of the mask 4 is smaller than the diameter of the bottom wall 5' and thus of the side wall 5" of the housings 5 of the base 5.

Advantageously, the mask 4 consists of a single piece, that is, it is monolithic, specifically made by moulding. Additionally, it is made of polymeric material, preferably TPE, that is thermoplastic polymer.

Advantageously, the main portion 4' of the mask 4 comprises, on the surface facing away from the base 3, a surface processing 4", for example a shaping, knurling or other similar process, configured to increase the friction of that surface and thus allow objects to rest securely on it in such a way as to limit their movement.

Advantageously, both the mask 4 and, correspondingly, the base 3 can comprise one or more openings 7, in the illustrated example two openings 7, configured to house electrical sockets, buttons or other vehicle operating elements.

The housing system 1 comprises retention means 10 configured to vary, specifically to decrease, the diameter of the housing 6 defined by the mask 4 so as to retain, by radial preload, with respect to the axis of opening of the housing 6, an object V inserted therein, such as a liquid container V.

Advantageously, these retention means 10 are selectively removable. In particular, it is envisaged that such retention means 10 may define multiple smaller diameters than the housing 6 diameter.

In the illustrated embodiment, the retention means 10 comprise at least one abutment 12, in particular multiple ones, supported by the side wall 6" and configured to cooperate in radial contact with the container V.

Specifically, the abutments 12 are supported by respective openings 11 made in the side wall 6'' of the housing 6 of the mask 4.

Advantageously, these abutments 12 are vertically placed at the same height with respect to the bottom wall 6' and are circumferentially equispaced with respect to the opening axis of the housing 6 on the side wall 6".

Specifically, in the embodiment illustrated, there are three abutments 12 angularly equispaced between them.

Advantageously, the abutments 12 comprise a contact portion 12' and a perimeter portion 12". As can be seen in Figure 3, the perimeter portion 12" extends over at least part of the perimeter, in particular the entire perimeter, of the contact portion 12'.

Advantageously, the perimeter portion 12" is configured to cooperate in contact with the outer radial surface of the side portion 6'' while the contact portion 12' is configured to extend radially inward into the space of the housing 6.

Advantageously, in the illustrated embodiment, the perimeter portion 12" is radially interposed in contact between the side walls 5", 6'' of the housings 5, 6 so as to be "clamped" between them.

Advantageously, the contact portion 12' has a convex shape facing the space bounded by the housing 6.

As illustrated, the contact portion 12' may have an essentially truncated cylinder shape, that is, comprising a radially directed convex portion facing the opening axis of the housing 5 and a pair of essentially planar portions circumferentially opposite each other.

The contact portion 12' is preferably made of deformable material.

Advantageously, each abutment 12 consists of a single piece, that is, is monolithic and advantageously made of polyurethane material.

The abutments 12 can preferably be provided in a set of different pre-set sizes so that a range of selectively different diameters can be provided.

The operation of the embodiment of the housing system according to the invention described above is the following.

As illustrated in Figure 4, when a liquid container V is inserted into the housing 5, it cooperates in contact with the contact portions 12' of the abutments 12. This creates a radial reactive force that keeps the liquid container V in pre-loading contact in the housing 6 without allowing it to move. Clearly, should the size of the liquid container V vary, the contact portion 12' may compress to allow for the insertion of the liquid container V.

In a maintenance condition, the user can remove the mask 4 and abutments 12 to clean the housing system 2 or can alternatively replace them with different sized abutments to vary the diameter of each housing 6.

The advantages of a housing system, vehicle portion, and vehicle according to the invention are clear from the foregoing.

Thanks to the housing system envisaged, it is possible to provide a particularly versatile, compact and easy-to-build housing system.

In fact, it is possible to only vary the retention means, if necessary, or the mask to customise the housings and their size without varying the base connected to the vehicle portion.

Furthermore, by dividing the components of the housing system into several parts, it is possible to use different materials that best suit each portion.

Clearly, it is therefore possible to design the retention means according to specific requirements without having to redesign the entire housing system, allowing for considerable savings.

Lastly, it is clear that modifications can be made to the housing system, vehicle portion, and vehicle according to this invention, and variations produced thereto, without, however, departing from the scope of protection defined by the claims.

Clearly, the shape of the housing system and the number of housings may vary depending on the type of vehicle and its requirements.

Again, the shape of the retention means and their type can vary according to need.

Additionally, the types of materials can be varied.

As mentioned, the vehicle portion can be a dashboard or a portion of the cabin or passenger compartment of the vehicle.

## Claims

1. A housing system (2) for a portion (1) of a vehicle, the said housing system (2) comprising a base (3) connectable to said portion (1) and a mask (4) housed in the said base (3), the said mask (4) defining at least one housing (6) suitable for containing an object (V),the said housing system (2) comprising retention means (10) configured to vary the space delimited by the said housing (6) and to cooperate radially in contact and provide a radial preload to the said object (V), wherein the said mask (4) is selectively removable from the said base (3) and wherein the said retention means (10) are selectively removable from the said mask (4).

2. The housing system according to claim 1, wherein the said base (3) defines a corresponding housing (5) suitable for containing the said housing (6) of the said mask (4).

3. The housing system according to claim 2, wherein the said base (3) the and said mask (4) each comprise a main portion (3', 4') extending along respective longitudinal and transverse axes (A, B) the said housings (5, 6) each comprise a bottom wall (5', 6') spaced along a direction of a vertical axis (C) perpendicular to the said longitudinal and transverse axes (A, B) and at least one side wall (5", 6") extending from the said bottom wall (5', 6') and connecting it to the respective main portion (3', 4').

4. The housing system according to claim 3, wherein the said retention means (10) are carried by the said side wall (6") of the said housing (6) of the said mask (4).

5. The housing system according to claim 3 or 4, wherein the said retention means comprise at least one abutment (12) extending radially in the said housing and configured, in use, to cooperate radially in contact with the said object (V).

6. The housing system according to claim 5, wherein the said retention means (10) comprise a respective opening (11) housing the said at least one abutment (12).

7. The housing system according to claim 6, wherein the said abutment (12) comprises a contact portion (12") extending radially through the said opening (11) in the said space of the said housing (6) and a perimeter portion (12") cooperating on the opposite side on the said side wall (6") of the said housing (6).

8. The housing system according to claim 7, wherein the said perimeter portion (12") is radially in contact between the said side walls (6", 5") of the said housings (6, 5).

9. The housing system according to claim 7 or 8, wherein the said contact portion (12') is deformable.

10. The housing system according to any of the preceding claims, wherein the said base (3) consists of a single piece.

11. The housing system according to any of the preceding claims, wherein the said mask (4) consists of a single piece.

12. The housing system according to any of the preceding claims, wherein the said base (3) and/or the said mask are made of polymeric/plastic material.

13. A portion (1) of a vehicle equipped with a housing system (2) according to any of the preceding claims.

14. A vehicle comprising a housing system (2) according to any of claims 1 to 12.
